# EUROPÄISCHE PATENTSCHRIFT

(11) **EP 2 415 601 B1**
(45) Veröffentlichungstag und Bekanntmachung des Hinweises auf die Patenterteilung: **26.06.2013**
(21) Anmeldenummer: 11006343.5
(22) Anmeldetag: 02.08.2011
(51) Int. Cl.: B32B 39/00, B32B 37/12, B05B 13/04, B05C 1/08, B32B 3/28, E04C 2/32, E04C 2/34, B32B 37/18

(54) **Verfahren und Vorrichtung zur Herstellung einer Sandwichplatte**
Method and device for producing a sandwich board
Procédé et dispositif de fabrication d'une plaque sandwich

(30) Priorität: 05.08.2010 DE 102010033581
(43) Veröffentlichungstag der Anmeldung: 08.02.2012
(73) Patentinhaber: Waas, Alfred, 85051 Ingoldtadt (DE); Waas, Thomas, 85053 Ingolstadt (DE)
(72) Erfinder: Waas, Alfred, 85051 Ingoldtadt (DE); Waas, Thomas, 85053 Ingolstadt (DE)
(74) Vertreter: Liebl, Thomas

(56) Entgegenhaltungen:
- WO-A1-2005/113230
- DE-A1-102007 056 690
- DE-A1-102008 007 516
- DE-U1-202009 004 884

## Beschreibung

Die Erfindung betrifft ein Verfahren zur Herstellung einer Sandwichplatte nach dem Oberbegriff des Anspruchs 1 sowie eine Vorrichtung zur Herstellung einer Sandwichplatte nach dem Oberbegriff des Anspruchs 10.

Der Einsatz von Sandwichplatten bzw. Sandwichelementen im Rohbau, Hochbau, Fertigbau, Ausbau, Innenausbau, zum Schall- und Wärmeschutz, für Inneneinrichtungen, Möbel, für Türen und Türfüllungen, Dekorationen, im Fahrzeugbau, Caravanbau, Schiffsausbau, Flugzeuginnenausbau, in der Landwirtschaft und in der Verpackungstechnik, um nur einige zu nennen, ist allgemein bekannt, da derartige Sandwichplatten bei ausgezeichneter Steifigkeit und Tragfähigkeit auch ein extrem niedriges Gewicht aufweisen.

Es gibt eine Vielzahl von unterschiedlichsten Sandwichkonstruktionen, bei denen regelmäßig zwischen zwei Deckschichten eine Kern- oder Mittellage angeordnet ist, die mit den Deckschichten fest verbunden ist. Beispielsweise ist eine derartige Sandwichplattenkonstruktion aus der WO 2005/113230 A1 bekannt, bei der die dreidimensionale Mittellage kuppelartige Erhebungen und wannenartige Vertiefungen aufweist, die jeweils über Sattelflächen miteinander verbunden sind, ebenso wie die wannenartigen Vertiefungen auch über Sattelflächen miteinander verbunden sind. In der Praxis hat sich mit einer derartigen Miftellagenkonstruktion herausgestellt, dass die Anhaftung der Deckschichten an der Mittellage, und hier insbesondere an den Kuppeln der Mittellage problematisch bzw. ungenügend ist.

Zur Herstellung der Sandwichplatten, bei denen die Mittellage mit den Deckschichten verklebt wird, werden regelmäßig Sprühsysteme eingesetzt, insbesondere sogenannte Spinnsprühsysteme, bei denen ein dünner Klebstoff- bzw. Hotmelt-Faden erzeugt wird, der mit beheizter Luft in eine drehende Bewegung versetzt wird. Um eine gewisse Auftragsbreite mit einem derartigen Spinnsprühsystem zu erreichen, sind eine Vielzahl einzelner Düsen notwendig, die während des Klebstoffauftrags eine starke Luftverwirbelung auf dem Substrat erzeugen, was grundsätzlich nachteilig ist. Des Weiteren neigen derartige Düsen stark zu einer Verschmutzung und Verstopfung, so dass das Sprühbild derartiger Spinnsprühsysteme regelmäßig bereits nach kurzer Zeit so schlecht wird, dass der Klebstoffauftrag nicht mehr in der gewünschten Qualität erfolgen kann und die Produktion gestoppt sowie die Düsen gesäubert werden müssen. Ein weiteres Problem eines derartigen Spinnsprühsystems ist der hohe Luftverbrauch und die dafür erforderliche Energiemenge, um die Luft zu erhitzen. Die Verwendung derartiger Sprühsysteme zur Herstellung von Sandwichplatten ist daher insgesamt relativ aufwändig und damit auch teuer.

Des Weiteren kommt bei luftundurchlässigen Mittellagen noch ein weiteres Problem hinzu, nämlich der Abfluss der Luft, die nicht durch die Kern- bzw. Mittellage durchdringen kann, so dass diese regelmäßig für eine gewisse Zeit auf der Kern- bzw. Mittellage stehen bleibt und eine Art Luftpolster ausbildet, die wiederum einen gleichmäßigen Klebstoffauftrag beeinträchtigen kann.

Des Weiteren zeigt die DE 10 2004 002 276 A1 ein selbsttragendes großflächiges Karosseriebauteil an Kraftfahrzeugen, bei dem eine Mittellage mit abgeflachten Kuppen ausgebildet ist, die flächig mit einer Ober- und einer Unterlage verklebt ist. Wie die Verklebung genau ausgeführt wird, wird in der DE 10 2004 002 276 A1 nicht geschildert. Einen ähnlichen Gegenstand mit kraterförmigen Aussparungen im Bereich der Erhebungen zeigt die DE 20 2009 004 884 U1.

Ferner beschreibt die DE 10313 055 A1 ein Verfahren und eine Vorrichtung zur Herstellung einer Leichtbauplatte, die eine erste Beleimungsstation zum Aufbringen einer Klebstoffschicht auf eine erste Seite einer Kernlage aufweist. Dieser ersten Beleimungsstation ist ferner eine Einführeinrichtung zugeordnet, um ein Zusammenführen der beleimten ersten Seite der Kernlage mit einer ersten Decklage zu erzielen. In Förderrichtung hinter dieser ersten Bearbeitungsstation weist die Vorrichtung eine zweite Bearbeitungsstation auf, die eine zweite Beleimungsstation zum Aufbringen einer Klebstoffschicht auf eine zweite Seite der Kernlage sowie eine nicht gezeigte Auflegeeinrichtung aufweist, über die die zweite Decklage auf die Klebstoffschicht der Kernlage aufsetzbar ist. Daran schließt sich in Transportrichtung eine dritte Bearbeitungsstation mit einer Presseinrichtung in Form von Rollen bzw. Walzen an, die eine einstellbare Presskraft auf die zusammenzufügenden Lagen ausübt. Bei einer derartigen Verfahrensführung und einer derartigen Vorrichtung besteht jedoch die zuvor geschilderte Gefahr, dass es hier zu starken Klebstoffverdrängungen nach außen kommt, weswegen bei dieser Ausführungsform und Verarbeitungsführung auch vorgesehen ist, seitliche Abschlüsse in Form von Rahmenriegeln vorzusehen, die die Platte randseitig umlaufend abschließen. Diese Rahmenriegel werden ebenfalls auf die Deckschichten aufgeleimt.

Es ist daher Aufgabe der vorliegenden Erfindung ein Verfahren zur Herstellung einer Sandwichplatte und eine Vorrichtung zur Herstellung einer Sandwichplatte zur Verfügung zu stellen, mittels dem bzw. mittels der eine Sandwichplatte auf fertigungstechnisch einfache Weise mit hoher Funktionssicherheit und gleichbleibend hoher Qualität hergestellt werden kann. Eine weitere Ausführung wird darin gesehen, eine Sandwichplatte bzw. eine Mittellage zur Verfügung zu stellen, bei der die Deckschichten zuverlässig und funktionssicher mit einer hohen Haftkraft mit der Mittellage verbunden werden können.

Diese Aufgaben werden gelöst durch die Merkmale der unabhängigen Patentansprüche. Vorteilhafte Ausgestaltungen hierzu sind jeweils Gegenstand der darauf rückbezogenen Unteransprüche.

Gemäß Anspruch 1 wird ein Verfahren zur Herstellung einer Sandwichplatte vorgeschlagen, wobei die Sandwichplatte wenigstens eine zwischen zwei Deckschichten angeordnete Kern- oder Mittellage aufweist, die mit den Deckschichten fest verbunden ist, wobei bevorzugt, aber nicht zwingend, vorgesehen ist, dass die Mittellage wenigstens bereichsweise dergestalt ausgebildet ist, dass diese eine definierte Hohlraumstruktur zwischen den beiden Deckschichten ausbildet. Erfindungsgemäß ist vorgesehen, dass die Mittellage in eine Werkstück-Aufnahmeeinrichtung eingelegt wird, dass anschließend die Mittellage auf beiden Seiten mittels einer eine Auftragswalze aufweisenden Klebstoffauftragswalzeinrichtung in definierten Mitteitagenbereichen mit Klebstoff beschichtet wird, insbesondere flächig mit Klebstoff beschichtet wird, und dass weiter anschließend die so mit Klebstoff beschichtete Mittellage mittels einer Transfereinrichtung einer Presseinrichtung zugeführt wird, in der die beiden Deckschichten, bevorzugt gleichzeitig, mit der Mittellage verbunden und/oder verpresst werden. Weiter ist erfindungsgemäß vorgesehen, dass die Klebstoffauftragswalzeneinrichtung zusätzlich zu der wenigstens einen Auftragswalze wenigstens eine Klebstoff-Sprüheinrichtung, insbesondere eine Spinnsprühdüse oder dergleichen, aufweist, mittels der die Mittellage entlang eines definierten äußeren Umfangsrandbereichs wenigstens abschnittsweise mit Klebstoff besprüht wird, wobei der Klebstoff mit der Auftragswalze auf den sich an den Umgangsrandbereich nach innen hin anschließenden Mittellagenbereich aufgebracht wird.

Mit einer derartigen Verfahrensführung, bei der der Klebstoff mittels einer Auftragswalze bevorzugt flächig auf die definierten Mittellagenbereiche aufgetragen wird, ergibt sich der Vorteil, dass der Einsatz einer Vielzahl von Düsen zum Klebstoffauftrag eingespart bzw. deutlich reduziert werden kann, so dass die Gefahr von Produktionsstörungen durch sich zusetzende bzw. verschmutzte Düsen erheblich reduziert bzw. nicht mehr gegeben ist. Gleichzeitig kann mit einer derartigen Auftragswalze der Klebstoff in gleichbleibender Qualität flächig aufgetragen werden, so dass sich eine zuverlässige und flächige Anhaftung der Mittellage an den Deckschichten realisieren lässt. Mit dem erfindungsgemäß weiter vorgesehenen, bevorzugt integral mit der wenigstens einen Auftragswalze an einem Schwenkarm, insbesondere einem Roboterarm, der Auftragswalzeinrichtung angeordneten Sprühsystem ist es zudem möglich, den Umfangsrandbereich mit einem dünnen Klebstofffilm zu benetzen, so dass es beim Verpressen der Mittellage mit den Deckschichten nicht zu einem unerwünschten seitlichen Klebstoffaustritt kommen kann, wie dies gegebenenfalls der Fall wäre, wenn der Klebstoff auch in diesem Umfangsrandbereich mittels der Auftragswalze flächig und dickschichtiger aufgetragen würde. Grundsätzlich könnten hierzu aber selbstverständlich auch zwei separate Schwenkarme bzw. Roboterarme vorgesehen sein, wodurch der bauliche Aufwand jedoch insgesamt erhöht werden würde.

Besonders vorteilhaft ist der Einsatz einer derartigen Auftragswalze in Verbindung mit einer Mittellage, bei der die Mittellage eine Mehrzahl von voneinander beabstandeten Kuppen und Tälern aufweist, wobei die Kuppen an ihrer Spitze abgeflacht sind und damit eine flächige Klebstoffauftragsfläche ausbilden, auf die mittels der Auftragswalze in definierten Mittellagenbereichen eine Kleberaupe oder ein Klebepunkt flächig aufgetragen werden kann.

Hierbei ist insbesondere der Einsatz einer solchen Kern- oder Mittellage von Vorteil, bei der die Kern- oder Mittellage eine Mehrzahl von Kuppen und Tälern aufweist, wobei wenigstens ein Teil der Kuppen an ihrer Spitze dergestalt abgeflacht ist, dass diese eine Klebstoffauftragsfläche ausbilden, wobei in die durch die kuppenseitige Abflachung ausgebildete Klebstoffauftragsfläche eine Vertiefung, insbesondere eine dellen- und/oder kraterartige Vertiefung, eingebracht ist. Mittels einer derartigen Vertiefung wird sichergestellt, dass im Bereich der kuppenseitigen Abflachung eine Art Klebstoffreservoir ausgebildet wird, so dass hierdurch zuverlässig sichergestellt werden kann, dass beim Verpressen der Kern- bzw. Mittellage mit der wenigstens einen Deckschicht sichergestellt ist, dass eine ausreichende Klebstoffmenge zwischen der Deckschicht und der kuppenseitigen Abflachung vorhanden ist, mittels der eine noch bessere und zuverlässigere, flächige Anhaftung einer Kern- bzw. Mittellage an der oder den Deckschichten erzielt werden kann.

Besonders bevorzugt ist hierbei, dass die Täler, die bevorzugt als wannenartige Vertiefungen ausgebildet sind, und Kuppen in einem regelmäßigen Muster angeordnet sind und zwar insbesondere dergestalt, dass die Kuppen auf der ersten Seite der Mittellage erhaben ausgebildet sind und von der gegenüberliegenden, zweiten Mittellagenseite aus betrachtet Täler ausbilden, und dass, entsprechend umgekehrt, die erhabenen Kuppen der zweiten Seite der Mittellage von der gegenüberliegenden ersten Mittellagenseite aus betrachtet Täler ausbilden. Damit ergibt sich eine besonders einfach herzustellende Mittellagenausgestaltung mit regelmäßiger Kuppenanordnung auf beiden Seiten der Mittellage, die aufgrund ihrer Abflachung hervorragend für einen flächigen Klebstoffauftrag geeignet sind. Eine derartige Mittellage kann zum Beispiel einfach in einer entsprechenden Form hergestellt werden.

Dabei können die Kuppen auf wenigstens einer der Mittellagenseiten bzw. auf den jeweiligen Mittellagenseiten selbstverständlich zumindest bereichsweise auf unterschiedlichen Höhenniveaus liegen, um zum Beispiel bestimmten vorgesehenen geometrischen Formgebungen und Ausgestaltungen der nicht notwendigerweise eben auszubildenden Sandwichplatte Rechnung zu tragen. In diesem Zusammenhang ist es besonders vorteilhaft, wenn die Auftragswalze der Klebstoffauftragswalzeneinrichtung mittels der Steuer und/oder Regeleinrichtung so konturangepasst entlang der jeweils zu beschichtenden Mittellagenseite verfahren wird, dass diese einen stets gleichen Abstand zu dem zu beschichtenden Bereich auch für den Fall aufweist, dass die zu beschichtenden Bereiche wenigstens teilweise unterschiedlich ausgebildet sind, insbesondere im Querschnitt betrachtet so unterschiedlich ausgebildet sind, dass diese eine unterschiedliche Form und/oder Höhe und/oder Breite aufweisen. Durch eine derartige in unterschiedliche Raumrichtungen gesteuert bzw. geregelt verfahrbare Auftragswalze der Klebstoffauftragswalzeneinrichtung wird somit auf einfache Weise ein Klebstoffauftrag mit gleichbleibender Qualität für hochwertige Sandwichplatten zur Verfügung gestellt.

Gemäß einer weiteren bevorzugten konkreten Ausgestaltung der Mittellage ist vorgesehen, dass wenigstens eine Mehrzahl der Täler bzw. wannenartigen Vertiefungen von jeweils vier im Wesentlichen in einer quadratischen Anordnung um das jeweilige Tal herum angeordneten Kuppen umgeben ist, wobei weiter bevorzugt vorgesehen ist, dass zwischen den jeweils benachbarten Kuppen konkav gewölbte Sattelflächen vorgesehen sind, die wiederum die Täler umgrenzen und/oder ausbilden. Mit einer derartigen konkreten Ausbildung der Mittellage ergeben sich Sandwichplatten mit einer hohen Steifigkeit und einer ausgezeichneten Tragfähigkeit bei gleichzeitig nach wie vor geringem Gesamtgewicht.

An dieser Stelle soll ausdrücklich erwähnt werden, dass die Begrifflichkeit "Klebstoff" in Verbindung mit der vorliegenden Erfindungsidee ausdrücklich in einem weiten Sinne zu verstehen ist und ausdrücklich sämtliche Stoffschlussverbindungen mit einschließen soll, bei denen ein Hilfsmittel verwendet wird, um die Deckschichten an der wenigstens einen Mittellage anzuhaften.

Eine erfindungsgemäße Vorrichtung zur Herstellung einer Sandwichplatte, insbesondere zur Durchführung eines erfindungsgemäßen Verfahrens, ist dadurch gekennzeichnet, dass diese eine Werkstück-Aufnahmeeinrichtung aufweist, in die die Mittellage zur Klebstoffbeschichtung eingelegt werden kann, und dass weiter eine, eine Auftragswalze aufweisende Klebstoffauftragswalzeneinrichtung vorgesehen ist, die mit einem Klebstoffreservoir verbunden ist oder ein solches aufweist. Mittels der Auftragswalze kann, gesteuert oder geregelt über eine mit der Vorrichtung gekoppelte oder ebenfalls wiederum Bestandteil derselben bildende Steuer- und/oder Regeleinrichtung, die Mittellage in definierten Mittellagenbereichen mit Klebstoff beschichtet werden. Zudem weist eine derartige erfindungsgemäße Vorrichtung eine Transfereinrichtung auf, mittels der die mit Klebstoff beschichtete Mittellage zu einer Presseinrichtung transferierbar bzw. transportierbar ist, in welcher Presseinrichtung eine Deckschicht-Aufnahme vorgesehen ist, in der eine oder bevorzugt beide Deckschichten aufnehmbar und bei einer Pressenbetätigung mit der Mittellage verpressbar und/oder verbindbar sind. Weiter ist erfindungsgemäß vorgesehen, dass die Klebstoffauftragswalzeneinrichtung zusätzlich zu der wenigstens einen Auftragswalze wenigstens eine Klebstoff-Sprüheinrichtung, insbesondere eine Spinnsprühdüse oder dergleichen aufweist, mittels der die Mittellage entlang eines definierten äußeren Umfangsrandbereichs wenigstens abschnittsweise mit Klebstoff besprüht wird, wobei der Klebstoff auf den sich an den Umgangsrandbereich nach innen hin anschließenden Mittellagenbereich mit der Auftragswalze aufgebracht wird. Die sich hierdurch ergebenden Vorteile sowie baulichen Ausgestaltungen wurden bereits zuvor in Verbindung mit der Verfahrensführung ausführlich gewürdigt, so dass auf die dort gemachten Ausführungen verwiesen wird.

Gemäß einer weiteren besonders bevorzugten Verfahrensführung ist vorgesehen, dass die Mittellage nach der Beschichtung einer ersten Mittellagenseite in der Werkstück-Aufnahmeeinrichtung gewendet wird und dass anschließend die zweite Mittellagenseite in definierten Mittellagenbereichen mit Klebstoff beschichtet wird. Die Begrifflichkeit "Wenden" ist hier ebenfalls in einem weiten Sinne zu verstehen, so dass auch ein Klappen oder dergleichen umfasst sein soll, wenngleich eine Wendung der Mittellage um 180° die bevorzugte Variante darstellt. Mit einem derartigen Wenden der einseitig beschichteten Mittellage in der Werkstück-Aufnahmeeinrichtung wird in ein und derselben Station eine kompakte beidseitige Beschichtungsmöglichkeit zur Verfügung gestellt. In diesem Zusammenhang ist es besonders vorteilhaft, dass die Werkstück-Aufnahmeeinrichtung als Schwenktisch mit einer ersten Auflageeinrichtung für die Mittellage ausgebildet ist, auf der die Mittellage für eine Beschichtung einer ersten Mittellagenseite aufliegt bzw. gehaltert ist, und dass weiter die Werkstück-Aufnahmeeinrichtung einen Schwenkmechanismus aufweist, mittels dem die erste Auflageeinrichtung so um eine Schwenkachse verschwenkbar ist, dass die einseitig beschichtete Mittellage mit ihrer beschichteten Seite auf einer vorzugsweise als Nagelbett ausgebildeten zweiten Auflageeinrichtung aufliegt bzw. dort gehaltert ist, wobei die unbeschichtete Mittellagenseite dann nach oben, von der zweiten Auflageeinrichtung weg weist. Unter einem Nagelbett wird dabei eine Auflage mit einer Mehrzahl von Stiften (Nägeln) verstanden, die die beschichtete Seite der Mittellage lediglich punktuell abstützen, um eine Beschädigung bzw. Beeinträchtigung des bereits aufgebrachten Klebstoffs zu vermeiden. Bevorzugt erfolgt dabei die Abstützung der Mittellage mittels der Stifte bzw. Nägel in denjenigen Bereichen, in denen keine Klebstoffschicht auf die Mittellagenseite aufgebracht ist, also zum Beispiel in Verbindung mit der zuvor bereits ausfühdich gewürdigten bevorzugten Mittellagenausgestaltung in den Tälern der Mittellage.

Gemäß einer weiteren besonders bevorzugten Verfahrensführung wird vorgeschlagen, dass die bereits beschichtete Mittellagenseite nach dem Wenden in der Werkstück-Aufnahmeeinrichtung mittels wenigstens einer Heizeinrichtung mit Wärme bzw. Hitze beaufschlagt wird, und zwar vorzugsweise dergestalt, dass die auf die Mittellage aufgebracht erste Klebstoffschicht auf eine definierte Temperatur, bevorzugt wenigstens eine Klebstoffaktivierungstemperatur, höchst bevorzugt auf eine Temperatur von größer 80°C erwärmt bzw. erhitzt wird. Dadurch wird somit auf einfache Weise sichergestellt, dass während der Beschichtung der gegenüberliegenden Mittellagenseite die bereits aufgebrachte Klebstoffschicht der ersten Seite der Mittellage in zeitsparender Weise bereits auf eine gewünschte Temperatur erhitzt und damit der Klebstoff aktiviert werden kann. Dadurch lässt sich im weiteren Verfahrensverlauf eine separate, bauteil- und bauraumintensive Heizeinrichtung zuverlässig vermeiden. Denn die Erwärmung bzw. Erhitzung dieser ersten Klebstoffschicht kann beispielsweise einfachst dadurch erfolgen, dass der Werkstück-Aufnahmeeinrichtung, insbesondere der zweiten Auflageeinrichtung, wenigstens eine Heizeinrichtung, vorzugsweise wenigstens ein Karbonstrahler oder dergleichen, zugeordnet ist oder Bestandteil derselben ist, mittels der die auf die Mittellage aufgebrachte erste Klebstoffbeschichtung beheizt werden kann.

Nach der beidseitigen Beschichtung der Mittellage wird diese dann von der Transfereinrichtung aufgenommen und der Presseinrichtung zugeführt, wobei gemäß einer besonders bevorzugten Ausgestaltung der vorliegenden Erfindungsidee vorgesehen ist, dass der Transfereinrichtung wenigstens eine Heizeinrichtung, vorzugsweise wenigstens ein Karbonstrahler oder dergleichen, zugeordnet ist oder Bestandteil derselben ist, mittels der nunmehr die neu aufgebrachte zweite Klebstoffschicht, vorzugsweise während der Aufnahme der beidseitig beschichteten Mittellage und/oder während des Transfers zur Presseinrichtung, mit Wärme beaufschlagt werden kann, um auch diese auf eine gewünschte, definierte Temperatur, bevorzugt auf eine Klebstoffaktivierungstemperatur, höchst bevorzugt auf eine Temperatur größer 80°C zu erwärmen oder zu erhitzen. Durch diese Integration einer weiteren Heizeinrichtung in die Transfereinrichtung lässt sich somit ebenfalls nochmals vorteilhaft eine separate Heiz- bzw. Klebstoffaktivierungsstation einsparen und damit auch die Bauteilvielfalt sowie vor allem Bauraum vorteilhaft reduzieren. Weiter ist durch diese erfindungsgemäße Variante auf einfache Weise sichergestellt, dass die beidseitig beschichtete Mittellage der Presseinrichtung kurz nach deren Beschichtung zugeführt wird.

Der dadurch gewonnene Bauraum ermöglicht es daher, gegebenenfalls zur Erhöhung der Taktzeiten und damit zur Erhöhung der Produktionsmenge, bezogen auf die Zeit, eine zweite Klebstoffauftragswalzeneinrichtung vorzusehen, mittels der dieselben Beschichtungsarbeiten durchgeführt werden wie mit einer ersten Klebstoffauftragswalzeneinrichtung. Die Taktung der beiden Klebstoffauftragswalzeneinrichtungen kann dann zum Beispiel dergestalt vorgenommen werden, dass die eine Klebstoffauftragswalzeneinrichtung mit der Beschichtung einer ersten Mittellagenseite dann beginnt, wenn die zweite Klebstoffauftragswalzeneinrichtung mit der Beschichtung der zweiten Klebstoffseite fertig ist, um nur ein Beispiel zu nennen. Selbstverständlich können grundsätzlich auch mehr als zwei Klebstoffauftragswalzeneinrichtungen vorgesehen sein, falls dies für den jeweiligen konkreten Fall erforderlich sein sollte.

Die beidseitig mit Klebstoff beschichtete Mittellage wird gemäß einer bevorzugten konkreten Verfahrensführung in der Presseinrichtung mit den darin eingelegten Deckschichten mit einer definierten Presskraft, vorzugsweise einer Presskraft von mehr als 20 Tonnen (t) für eine definierte Presszeit, vorzugsweise für mehr als 20 Sekunden (s) verpresst, wobei die Presseinrichtung mittels einer Kühleinrichtung gekühlt wird, insbesondere dergestalt gekühlt wird, dass das Sandwichelement aus Mittellage und Deckschichten auf Raumtemperatur abgekühlt wird. Bevorzugt ist in diesem Zusammenhang vorgesehen, dass die Presseinrichtung durch eine Pressschließe, vorzugsweise eine Schwenkschließe, mit einer eine erste Deckschicht aufnehmenden Oberschale und einer eine zweite Deckschicht aufnehmenden Unterschale gebildet ist, wobei die Oberschale und/oder Unterschale aufeinander zu und voneinander weg verlagerbar sind, insbesondere im Falle einer Schwenkschließe um eine Schwenkachse aufeinander zu und voneinander weg verschwenkbar sind.

Dieser Presseinrichtung ist somit bevorzugt eine Kühleinrichtung, zum Beispiel ein Wärmetauscher oder dergleichen, zugeordnet, die auch Bestandteil der Presseinrichtung sein kann und mittels der das Werkzeug bzw. die Sandwichplatte auf die gewünschte Temperatur abgekühlt werden kann. Mit einer derartigen Ausgestaltung im Bereich der Presseinrichtung bzw. der Presseinrichtung selbst wird auf baulich einfache, hochintegrative Weise sichergestellt, dass am Ende der Presseinrichtung das fertige Sandwichplatten-Produkt in der gewünschten Qualität und Temperatur vorliegt, ohne dass zusätzliche weitere Arbeitsstationen vorgesehen werden müssten.

Für den Fall, dass die Sandwichplatte mit einer zusätzlichen Dekorschicht, zum Beispiel einer Teppichschicht oder dergleichen, beschichtet werden soll, kann vorgesehen sein, dass der Vorrichtung weiter ein Kaschierwerkzeug zugeordnet ist, in dem die fertig hergestellte Sandwichplatte mit der Dekorschicht kaschiert werden kann. Konkret kann hierzu vor dem eigentlichen Kaschiervorgang auf die Dekorschicht, die zum Beispiel insbesondere im Falle einer Teppichschicht als Dekorschicht mit einer kederartigen außenumfangsseitigen Einfassung versehen ist, mittels der wenigstens einen Auftragswalze der oder einer separaten Klebstoffauftragswalzeneinrichtung an einer Unterseite wenigstens bereichsweise flächig in definierten Unterseitenbereichen eine Klebstoffschicht aufgetragen werden. Anschließend wird dann die so beschichtete Dekorschicht zusammen mit der Sandwichplatte in das Kaschierwerkzeug eingebracht und die Dekorschicht auf die Sandwichplatte aufkaschiert. Wie bereits zuvor angedeutet, kann der Klebstoffauftrag hier grundsätzlich auch mittels der ohnehin bereits vorrichtungstechnisch vorhandenen wenigstens einen Klebstoffauftragswalzeneinrichtung gesteuert bzw. geregelt mittels der vorrichtungsseitigen Steuer- bzw. Regeleinrichtung erfolgen. Eine derartig mit einer Dekorschicht, zum Beispiel einer Teppichschicht, kaschierte Sandwichplatte kann vielfältigste Verwendung finden, zum Beispiel im Innenausbau, und hier insbesondere auch im Innenausbau von Flugzeugen, Fahrzeugen etc..

Besonders vorteilhaft ist in diesem Zusammenhang eine Verfahrensführung, bei dem die Klebstoffschicht mittels der Auftragswalze in einem definierten Spaltabstand zu der außenumfangsseitigen Einfassung der Dekorschicht aufgebracht wird, wobei der wenigstens bereichsweise Klebstoffauftrag im Anschluss an die Einfassung und damit im Spaltabstandsbereich mittels einer Klebstoff-Sprüheinrichtung, insbesondere einer Spinnsprühdüse, wie diese bereits zuvor beschrieben worden ist, vorgenommen werden kann und damit auch wieder mit einer bereits vorrichtungsseitig vorhandenen Klebstoffauftragswalzeneinrichtung, die zusätzlich weiter eine derartige Klebstoff-Sprüheinrichtung aufweist. Grundsätzlich kann jedoch auch hier die Klebstoff-Sprüheinrichtung durch eine selbstständige Einheit gebildet sein.

Um die Sandwichplatte herzustellen, insbesondere die Mittellage in einer gewünschten Art und Weise beschichten zu können, ist in der Steuer- und/oder Regeleinrichtung wenigstens ein Ablaufprogramm als Steuerprogramm abgelegt, mittels dem die Herstellung der jeweiligen Sandwichplatte automatisiert bzw. gesteuert durchgeführt wird, insbesondere die Verlagerung der Auftragswalze entlang der Mittellagenebene und senkrecht zur Mittellagenebene automatisiert durchgeführt wird. So kann zum Beispiel die Walze zur Beschichtung einer großflächigen Mittellage mehrfach versetzt werden und bahnartig über die Mittellage gesteuert verfahren werden, um in den gewünschten definierten Mittellagenbereichen einen flächigen Klebstoffauftrag bereitzustellen.

Die vorliegende Erfindungsidee wurde vorstehend hauptsächlich der besseren Verständlichkeit und damit der Übersichtlichkeit wegen in Verbindung mit der bevorzugten beidseitigen Beschichtung einer Kern- oder Mittellage beansprucht und erörtert. Es versteht sich jedoch, dass die erfindungsgemäße Verfahrensführung und die erfindungsgemäße Vorrichtung selbstverständlich auch in Verbindung mit einer lediglich einseitigen Beschichtung einer Kern- oder Mittellage Anwendung finden kann und dieses als äquivalente Ausführungsform auf jeden Fall ausdrücklich vom Schutzbereich der vorliegenden Erfindungsidee mit umfasst sein soll. Das Gleiche gilt für die vorteilhafte Kern- oder Mittellage analog. Auch diese kann grundsätzlich nur einseitig beschichtet sein oder werden, wenngleich die beidseitige Beschichtung die bevorzugte Variante ist.

Die vorstehend erläuterten und/oder in den Haupt- und Unteransprüchen wiedergegebenen vorteilhaften Aus- und Weiterbildungen der Erfindung können dabei - außer zum Beispiel in den Fällen eindeutiger Abhängigkeiten oder unvereinbarer Alternativen - einzeln oder aber auch in beliebiger Kombination miteinander zur Anwendung kommen.

Die Erfindung wird nachfolgend anhand einer Zeichnung näher erläutert.

Es zeigen:
- Fig. 1: schematisch eine Draufsicht auf eine erfindungsgemäße Vorrichtung zur Herstellung einer Sandwichplatte,
- Fig. 2: schematisch eine Ansicht in Richtung des Pfeils Y der Fig. 1,
- Fig. 3: schematisch eine Ansicht in Richtung des Pfeils X der Fig. 1,
- Fig.4: eine schematische Prinzipskizze einer erfindungsgemäßen Auftragswalze einer Klebstoffauftragswalzeneinrichtung,
- Fig. 5: schematisch eine Ansicht in Richtung des Pfeils Z der Fig. 4,
- Fig. 6: schematisch eine Prinzipskizze einer erfindungsgemäßen Auftragswalze einer Klebstoffauftragswalzeneinrichtung in, bezogen auf einen Querschnitt durch die Mittellage, unterschiedlichen Höhenlagen,
- Fig. 7: schematisch eine Draufsicht auf eine mittels einer Auftragswalze zu beschichtende Mittellagenseite mit unterschiedlichen Walzenpositionen,
- Fig. 8: schematisch eine Spinnsprühdüse einer erfindungsgemäßen Klebstoffauftragswalzeneinrichtung, mittels der ein dünner Klebstofffilm aussenumfangsseitig um die Mittellagenseite herum aufgebracht wird,
- Fig. 9: schematisch eine Prinzipskizze des Pressvorgangs in einer Presseinrichtung, bei der eine obere und untere Deckschicht mittels einer beidseitig beschichteten Mittellage verpresst werden (hier im Zustand vor dem Verpressen),
- Fig. 10: das verpresste Sandwichplatten-Bauteil gemäß Fig. 9,
- Fig. 11: schematisch die Darstellung einer auf einem Nagelbett gehalterten Teppichschicht, die auf ihrer der Sandwichplatte zugewandten Unterseite mit einer Klebstoffschicht beschichtet ist,
- Fig. 12: eine vergrößerte Darstellung der Einzelheit E der Fig. 11,
- Fig. 13a bis c: schematisch eine vorteilhafte Mittellagenausgestaltung mit abgeflachten Kuppen und durch wannenartige Vertiefungen gebildeten Tälern in unterschiedlichen Ansichten,
- Fig. 14a, b: schematisch eine vergrößerte Prinzipdarstellung einer bevorzugten Kuppelausgestaltung.

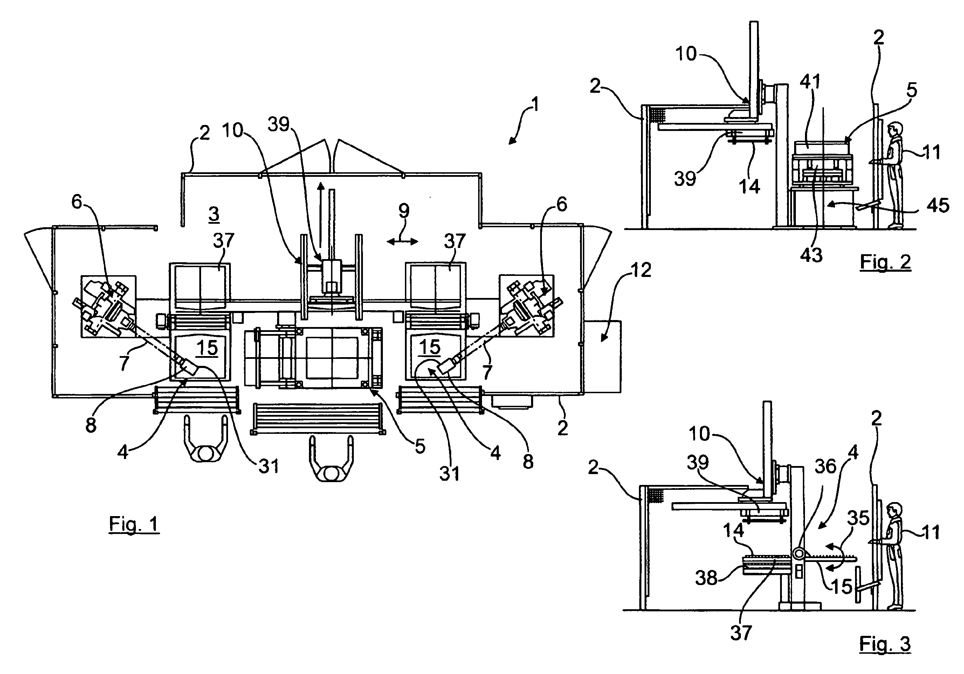

In der Fig. 1 ist schematisch eine Draufsicht auf eine erfindungsgemäße Vorrichtung 1 zur Herstellung einer Sandwichplatte gezeigt, die in einem zum Beispiel durch ein Schutzgitter 2 abgegrenzten Arbeitsraum 3 eine durch einen Schwenktisch 4 gebildete Werkstück-Aufnahmeeinrichtung aufweist, wobei hier im vorliegenden Fall beispielhaft jeweils ein Schwenktisch 4 seitlich neben einer durch eine Schwenkschließe 5 gebildeten Presseinrichtung angeordnet ist.

Den beiden Schwenktischen 4 ist jeweils ein Arbeitsroboter 6 zugeordnet, der im weiteren Sinne eine Klebstoffauftragswalzeneinrichtung ausbildet und einen Roboterarm 7 aufweist, an dem eine hier nicht im Detail dargestellte Auftragswalze 8 gehaltert und hier über dem Schwenktisch 4 angeordnet ist.

Zwischen den beiden Schwenktischen 4 ist eine entsprechend des Doppelpfeils 9 verfahrbare Transfereinrichtung 10 angeordnet, die gesteuert zwischen den beiden Schwenktischen 4 und der Schwenkschließe 5 in noch zu beschreibender Weise verfahren werden kann.

Wie dies insbesondere aus den Fig. 2 und 3 ersichtlich ist, sind die Schwenktische 4 und die Schwenkschließe 5 über das Schutzgitter 2 für einen Werker 11 mit einem hohen Unfallschutz zugänglich, um zum Beispiel die Schwenktische 4 bzw. die Schwenkschließe 5 mit den entsprechenden Bauteilen bestücken zu können bzw. im Falle der Schwenkschließe 5 ein fertig hergestelltes Sandwichplatten-Bauteil entnehmen zu können.

Die Schwenktische 4, die Schwenkschließe 5, die Arbeitsroboter 6 und die Transfereinrichtung 10 sind jeweils mittels einer oder mehrerer elektrischer Steuereinrichtungen 12 gekoppelt, mittels denen die Herstellung einer nachfolgend noch näher beschriebenen Sandwichplatte 13 automatisiert gesteuert wird.

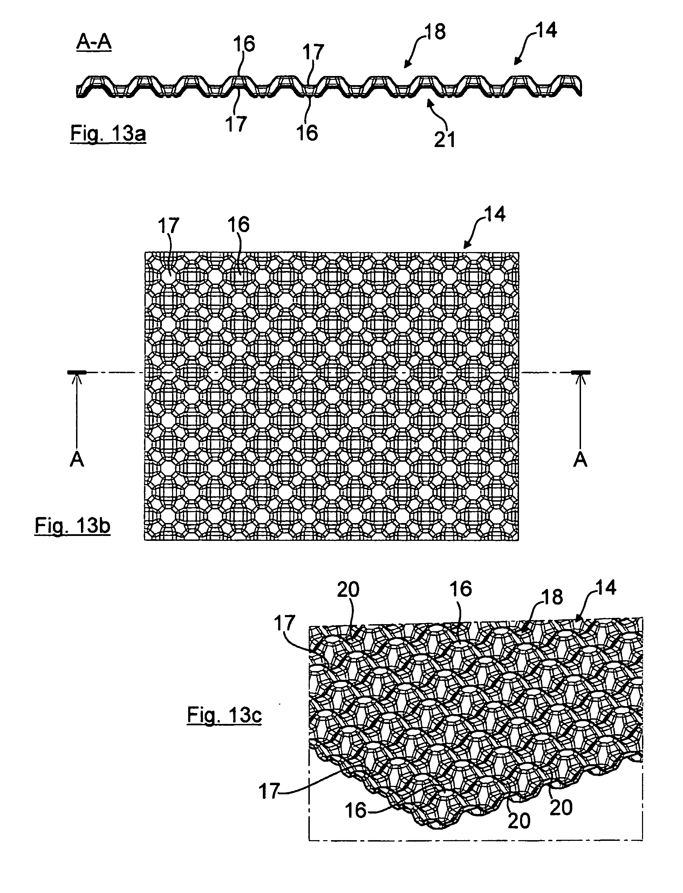

Zur Herstellung einer Sandwichplatte 13 wird eine in der Fig. 13c schematisch und perspektivisch in einer Teilansicht gezeigte dreidimensionale Mittellage 14 auf einer ersten Auflageeinrichtung 15 des Schwenktischs 4 aufgelegt und dort vorzugsweise gehaltert.

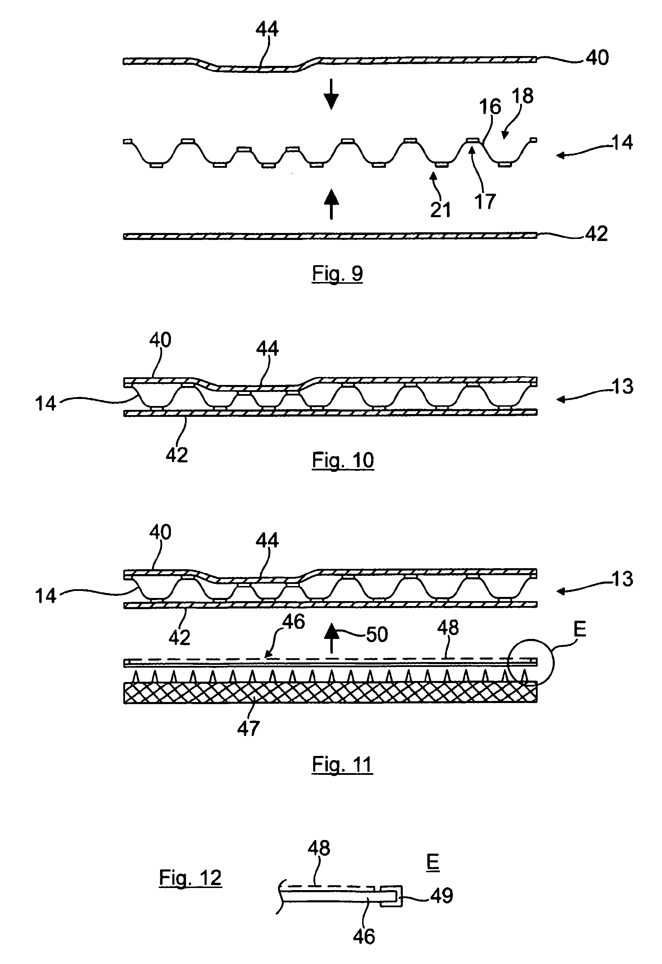

Bevor nun auf den weiteren Herstellungsvorgang eingegangen wird, soll nochmals der grundsätzliche Aufbau dieser in der Fig. 13 gezeigten Mittellage (auch anhand der Fig. 9 bis 11) näher erläutert werden: Diese Mittellage 14 weist, was insbesondere auch aus der Fig. 13b und der einen Schnitt entlang der Linie A-A zeigenden Fig. 13a ersichtlich ist, eine Mehrzahl von voneinander beabstandeten Kuppen 16 und Täler 17 auf, die in einem regelmäßigen Muster angeordnet sind, und zwar dergestalt, dass die Kuppen 16 auf der ersten Mittellagenseite 18 erhaben ausgebildet sind und von der gegenüberliegenden, zweiten Mittellagenseite 21 aus betrachtet, die Täler 17 ausbilden, während entsprechend umgekehrt, die erhabenen Kuppen 16 der zweiten, gegenüberliegenden Mittellagenseite 21 die Täler 17 der hier in der Fig. 13 ersichtlichen ersten Mittellagenseite 18 ausbilden. Im hier gezeigten bevorzugten Ausführungsbeispiel der Mittellage 14 sind die Kuppen 16 jeweils wenigstens mit einer Abflachung ausgebildet, um eine flächige Klebstoffauftragsfläche 19 auszubilden.

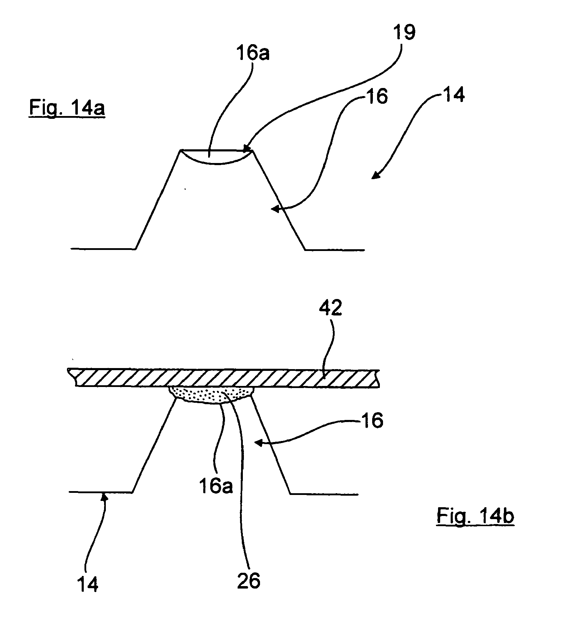

In der Fig. 14a ist zudem eine besonders bevorzugte Ausgestaltung der Kuppen 16 der Mittellage 14 gezeigt. Wie dies der lediglich äußerst schematischen Prinzipdarstellung der Fig. 14a zu entnehmen ist, kann in die eine flächige Klebstoffauftragsfläche 19 ausgebildete kuppenseitige Abflachung der Kuppen 16 zudem eine hier lediglich beispielhaft dellenartig ausgebildete Vertiefung 16a eingebracht werden, die auch jedwede andere Geometrie aufweisen kann, zum Beispiel kraterartig ausgebildet sein kann, um nur ein Beispiel zu nennen. Wie dies weiter insbesondere in Verbindung mit der Fig. 14b ersichtlich ist, bildet eine derartige mit einer Vertiefung 16a versehene kuppenseitige Abflachung eine Art Klebstoffreservoir für einen auf die Klebstoffauftragsfläche 19 aufgebrachte Klebstoffraupe 26 aus (die Aufbringung der Klebstoffraupe 26 wird nachfolgend noch näher beschrieben), wodurch sichergestellt ist, dass beim anschließenden Verpressen der Mittellage 14 mit einer hier lediglich beispielhaft und schematisch dargestellten Deckschicht 42 sichergestellt ist, dass eine ausreichende Klebstoff-Haftfläche zwischen den Kuppen 16 einerseits und der Deckschicht 42 andererseits hergestellt ist, die eine ausreichend feste Verbindung und Anbindung der Deckschicht 42 an der Mittellage 14 sicherstellt. Denn durch die Vertiefung 16a wird erreicht, dass insgesamt nur wenig bis gar kein Klebstoff 26 während des Pressvorgangs von der Klebstoffauftragsfläche 19 weg nach außen in Richtung der Kuppenflanken gedrückt wird, wo der Klebstoff keine ausreichende Haftverbindung mit der Deckschicht 42 mehr eingehen kann.

Die Anordnung der Kuppen 16 und Täler 17 ist hier so gewählt, dass die Täler 17 von jeweils vier im Wesentlichen in einer quadratischen Anordnung um das jeweilige Tal 17 herum angeordneten Kuppen 16 umgeben sind, wobei zwischen den jeweils benachbarten Kuppen 16 konkav gewölbte Sattelflächen 20 vorgesehen sind, die wiederum die Täler 17 umgrenzen bzw. ausbilden.

Dass die Kuppen 16 der ersten Mittellagenseite 18 die Täler 17 einer zweiten Mittellagenseite 21 ausbilden wird insbesondere auch aus der Darstellung der Mittellage 14 in der Fig. 9 ersichtlich, auf die nachfolgend noch näher eingegangen wird.

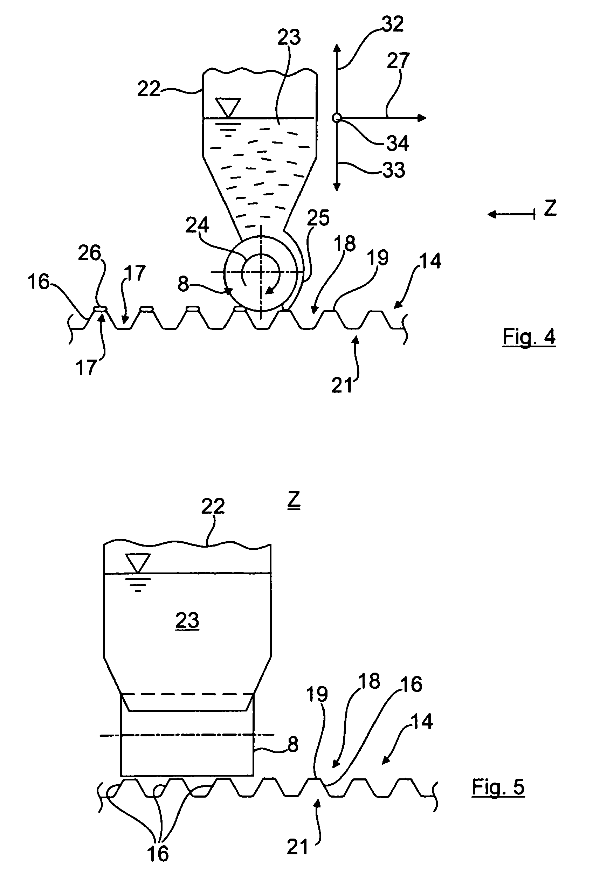

Wie bereits zuvor ausgeführt, wird eine derartige Mittellage 14 auf einer ersten Auflageeinrichtung 15 des Schwenktisches 4 aufgelegt bzw. gehaltert sowie anschließend gesteuert und automatisiert mittels des Arbeitsroboters 6 bzw. mit dessen Auftragswalze 8 ein flächiger Klebstoffauftrag auf die abgeflachten Kuppen 16 bzw. auf die Klebstoffauftragsfläche 19 der Kuppen 16 aufgebracht, wie dies lediglich schematisch und als Prinzipdarstellung in den Fig. 4 und 5 dargestellt ist.

Die Auftragswalze 8 ist hier lediglich beispielhaft und schematisch mit einem Klebstoffreservoir 22 dargestellt, welches Klebstoffreservoir 22 mit einem Klebstoff 23 befüllt ist. Bei einer Drehung der Auftragswalze 8 in Richtung des Pfeils 24 nimmt die Auftragswalze 8 einen Klebstofffilm 25 mit und kann dadurch im Vorbeigang eine flächige Klebstoffraupe 26 auf die durch Abflachung der Kuppen 16 ausgebildete Klebstoffauftragsfläche 19 flächig aufbringen, wie dies insbesondere aus der Fig. 4 ersichtlich ist.

Wie dies insbesondere aus der Fig. 5 ersichtlich ist, ermöglicht die Auftragswalze 8 eine gleichzeitige, flächige Klebstoffbeschichtung von mehreren quer zur Vorschubrichtung 27 (vergleiche Fig. 4) liegenden benachbarten abgeflachten Kuppen 16.

Um die Beschichtung der gesamten ersten Mittellagenseite 18 durchzuführen, wird die Auftragswalze 8 entsprechend gesteuert durch die elektrische Steuereinrichtung 12 nach dem Durchfahren einer ersten Bahn entsprechend der Pfeile 28 immer wieder solange versetzt, bis die gewünschte Anzahl von abgeflachten Kuppen 16 in einem definierten Bereich der ersten Mittellagenseite 18 in der zuvor geschilderten Art und Weise mit einer flächigen Klebstoffraupe 26 beschichtet ist.

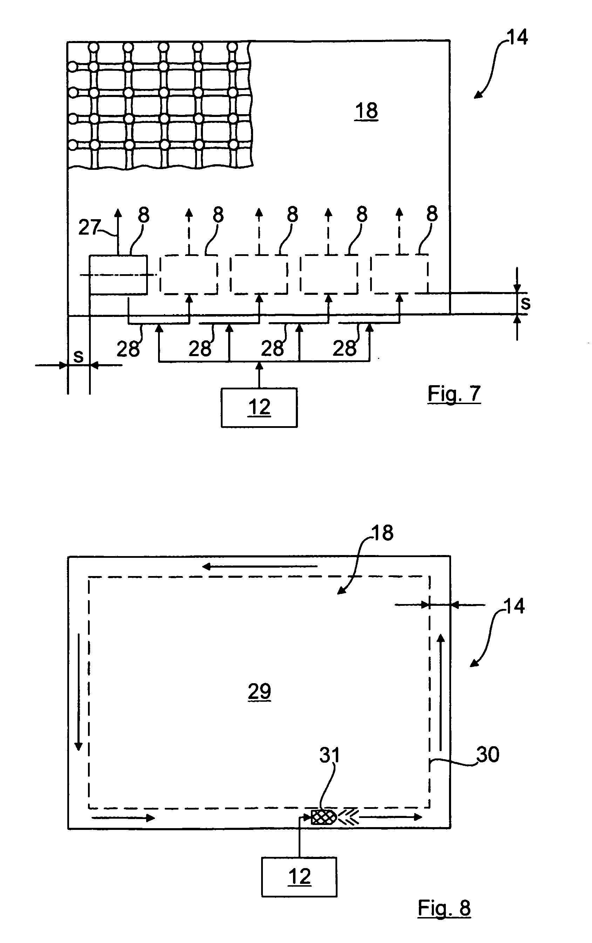

Wie dies insbesondere aus der Fig. 7 in Zusammenschau mit der Fig. 8 hervorgeht, erfolgt der flächige Klebstoffauftrag mittels der Auftragswalze 8 lediglich in einem inneren Mittellagenbereich 29 (Fig. 8) und damit nicht in einem durch den Spaltabstand s (Fig. 7) gekennzeichneten Außenumfangsbereich 30, der in der Fig. 8 schematisch und strichliert von dem inneren Mittellagenbereich 29 abgegrenzt ist. In diesem Außenumfangsbereich 30 der ersten Mittellagenseite 18 wird der Klebstoff mittels hier einer beispielhaft dargestellten Spinnsprühdüse 31 als Klebstoff-Sprüheinrichtung aufgesprüht, und zwar wenigstens abschnittsweise als dünner Klebstofffilm, wodurch insbesondere vermieden werden kann, dass beim späteren Verpressen ein randseitiger Klebstoffaustritt erfolgt.

Diese Spinnsprühdüse 31 ist bevorzugt ebenfalls am Roboterarm 7 angeordnet, bevorzugt benachbart zur Auftragswalze 8, wobei dann weiter bevorzugt eine Beschickung der Spinnsprühdüse 31 über das Klebstoffreservoir 22 für die Auftragswalze 8 erfolgt, zum Beispiel ventilgesteuert. Alternativ dazu kann aber auch eine separate Klebstoffbevorratung für die Spinnsprühdüse 31 vorgesehen sein. In diesem Zusammenhang wird darauf hingewiesen, dass der Klebstoff selbstverständlich in einer solchen Konsistenz, gegebenenfalls auch beheizt im Klebstoffreservoir 22 aufgenommen ist, dass sich ein Klebstoffauftrag als Klebstoffraupe 26 bzw. in Verbindung mit der Spinnsprühdüse 31 als Sprühfilm mit einer gewünschten Viskosität ergibt.

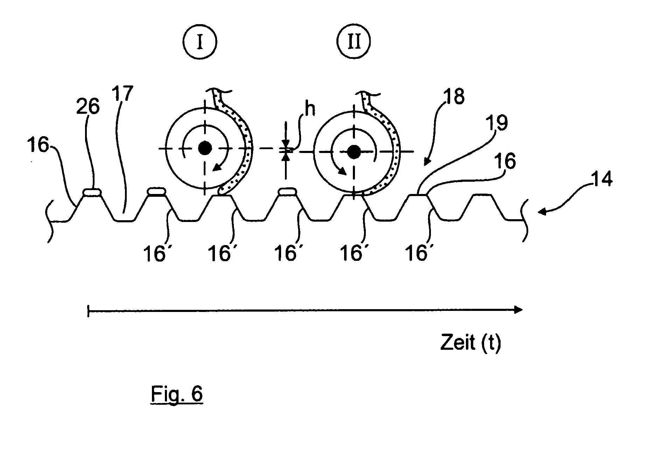

Wie dies in der Fig. 4 durch die Pfeile 32 und 33 für die Hochachsenrichtung sowie durch den in die Bildebene hinaus- bzw. hineingeführten Pfeil 34 für eine Richtung quer zur Vorschubrichtung 27 dargestellt ist, liegt ein besonderer Vorteil der erfindungsgemäßen Verfahrensführung bzw. Vorrichtung 1 darin, dass die Auftragswalze 8 mittels des Roboterarms 7 in unterschiedlichste Raumrichtungen verschwenkt bzw. verlagert werden kann, so dass die Auftragswalze 8, wie dies in der Fig. 6 schematisch dargestellt ist, gesteuert konturangepasst so entlang der zu beschichtenden Mittellagenseite verfahren werden kann, dass die Auftragswalze 8 einen stets im Wesentlichen gleichen Abstand zu dem jeweils zu beschichtenden Mittellagenbereich, hier der Klebstoffauftragsfläche 19 der abgeflachten Kuppen 16 auch für den Fall aufweist, dass diese zu beschichtenden Bereiche bzw. Klebstoffauftragsflächen 19 unterschiedlich ausgebildet sind, insbesondere, wie hier dargestellt, auf unterschiedlichen Höhenniveaus liegen. Wie in der Fig. 6 dargestellt, liegen einzelne der Kuppen 16 der oberen, ersten Mittellagenseite 18 hier mit ihrer jeweiligen Klebstoffauftragsfläche 19 höher als ein weiterer Teil von Kuppen 16', was in der Fig. 6 durch den Höhenversatz h der Auftragswalze 8 schematisch dargestellt ist. Durch die gesteuerte Verlagerungsmöglichkeit der Auftragswalze 8 wird zu den unterschiedlichen Zeitpunkten I und II somit eine entsprechende Lagekorrektur der Auftragswalze 8 automatisiert vorgenommen und dadurch sichergestellt, dass die Auftragswalze 8 sowohl bezüglich der höheren Kuppen 16 als auch bezüglich der niedrigeren Kuppen 16' in einer stets gleichen Auftragslage bzw. Auftragsposition angeordnet ist, so dass sich dadurch auch ein stets gleichbleibender flächiger Auftrag einer Klebstoffraupe 26 auf die Klebstoffauftragsfläche 19 ergibt.

Nach der so erfolgten Beschichtung der auf der ersten Auflageeinrichtung 15 des Schwenktisches 4 aufliegenden Mittellage 14 auf deren ersten Mittellagenseite 18 wird der Schwenktisch 4 entsprechend dem Pfeil 35 in der Fig. 3 betätigt und die einseitig beschichtete Mittellage 14 mittels eines hier nicht im Detail dargestellten Schwenkmechanismus des Schwenktisches 4 so um eine Schwenkachse 36 verschwenkt, dass die einseitig beschichtete Mittellage 14 mit ihrer beschichteten Seite 18 auf einer hier beispielhaft als Nagelbett ausgebildeten zweiten Auflageeinrichtung 37 aufliegt bzw. dort gehaltert ist, wobei die unbeschichtete, zweite Mittellagenseite 21 nach oben, von der zweiten Auflageeinrichtung 37 weg weist. Das Nagelbett der zweiten Auflageeinrichtung 37 ist hier bevorzugt so gestaltet, dass die einzelnen Stifte bzw. Nägel des Nagelbetts in denjenigen Bereichen der beschichteten ersten Mittellagenseite 18 angreifen, in denen keine Klebstoffbeschichtung erfolgt ist, also beispielsweise in den Tälern 17, was jedoch in der Fig. 3 nicht im Detail dargestellt ist.

Nach der dergestalt erfolgten Positionierung der Mittellage 14 auf der zweiten Auflageeinrichtung 37 wird die nach oben weisende zweite Mittellagenseite 21 analog zur zuvor geschilderten Beschichtung der ersten Mittellagenseite 18 beschichtet, wobei hier ein im Wesentlichen Gleiches oder aber auch ein anderes Beschichtungsbild vorgegeben sein kann.

Gleichzeitig mit der nunmehr erfolgenden Beschichtung der zweiten Mittellagenseite 21 der Mittellage 14 wird die nach unten, in Richtung zweite Auflageeinrichtung 37 weisende erste Klebstoffbeschichtung mittels eines Karbonstrahlers 38 als Heizeinrichtung mit einer definierten Temperatur von zum Beispiel über 80°C beaufschlagt, zum Beispiel durch entsprechende Ausnehmungen in der einen Auflagetisch ausbildenden zweiten Auflageeinrichtung 37 hindurch, wodurch der auf die erste Mittellagenseite 18 aufgebrachte Klebstoff auf seine Klebstoffaktivierungstemperatur aufgeheizt wird.

Nach der Beschichtung der zweiten Mittellagenseite 21 wird die Transfereinrichtung 10 gesteuert mittels der elektronischen Steuereinrichtung 12 in den Bereich oberhalb der Mittellage 14 und damit oberhalb der zweiten Auflageeinrichtung 37 verfahren und so abgesenkt, dass diese, zum Beispiel mittels einer hier nicht im Detail dargestellten Greifereinrichtung, die Mittellage 14 aufnimmt und dann in die in der Fig. 1 gezeigte Position verfährt. Auch dieser Transfereinrichtung 10 ist ein Karbonstrahler 39 zugeordnet, der nunmehr während der Aufnahme der Mittellage 14 bzw. deren Transport zur Schwenkschließe 5 die neu aufgebrachte zweite Klebstoffschicht auf der zweiten Mittellagenseite 21 erhitzt und dergestalt mit Wärme beaufschlagt, dass diese Klebstoffschicht ebenfalls auf eine Klebstoffaktivierungstemperatur von zum Beispiel über 80°C aufgeheizt wird. Anschließend wird dann die Schwenkschließe 5, die eine Oberschale 41 und eine Unterschale 43 aufweist, geöffnet, wozu zum Beispiel die Oberschale 41 um eine Schwenkachse von der Unterschale 43 weg verschwenkt wird, was hier aber nicht im Detail dargestellt ist. In die Oberschale 41 ist, was lediglich äußerst schematisch in der Fig. 9 dargestellt ist, in bzw. auf eine nicht im Detail dargestellte Deckschichtaufnahme eine erste Deckschicht 40 ein- bzw. aufgelegt und in auf die Unterschale 43 ist eine zweite Deckschicht 42 ebenfalls in bzw. auf eine hier nicht dargestellte Deckschichtaufnahme ein- bzw. aufgelegt. Mittels der Transfereinrichtung 10 wird nunmehr die beidseitig beschichtete Mittellage 14 zum Beispiel so in die Schwenkschließe 5 eingebracht, dass diese mit ihrer zweiten Mittellagenseite 21 auf der zweiten Deckschicht 42 positioniert ist. Anschließend wird nun die Schwenkschließe 5 geschlossen und für eine definierte Haltezeit von zum Beispiel 30 Sekunden eine Presskraft von zum Beispiel 20 Tonnen oder mehr aufgebracht, wodurch die beidseitig mit Klebstoff beschichtete Mittellage 14 mit den beiden Deckschichten 40 und 42 zu der in der Fig. 10 beispielhaft dargestellten Sandwichplatte 13 verpresst wird.

Aus der Fig. 10 ist weiter ersichtlich, dass beispielsweise die Deckschicht 40 mit einer Vertiefung 44 ausgebildet sein kann, um eine entsprechende Formgebung in der Sandwichplatte 13 abzubilden. Insbesondere in Verbindung mit derartigen, hier lediglich beispielhaft dargestellten Profilierungen der Sandwichplatte 13 ist die Verlagerungsmöglichkeit der Auftragswalze 8 in beliebige Raumrichtungen für einen gleichmäßigen Klebstoffauftrag vorteilhaft.

Wie dies in der Fig. 2 weiter lediglich äußerste schematisch dargestellt ist, ist der Schwenkschließe 5 eine Kühleinrichtung 45 zugeordnet, mittels der das Werkzeug bzw. die Sandwichplatte 13 auf eine gewünschte Temperatur, insbesondere auf Raumtemperatur abgekühlt wird. Eine derartige Kühleinrichtung 45 kann beispielsweise durch einen Wärmetauscher gebildet sein, der Kühlflüssigkeit durch die Ober- und/oder Unterschale zirkulieren lässt.

Nach dem Verpressen und der Herstellung der Sandwichplatte 13 wird die Schwenkschließe 5 geöffnet und der Werker 11 kann beispielsweise die fertig hergestellte Sandwichplatte entnehmen.

Der eben beschriebene Vorgang kann in Verbindung mit der erfindungsgemäßen Vorrichtung so getaktet durchgeführt werden, dass die Schwenkschließe 5 jeweils entsprechend einer vorgegebenen Taktung mit den beidseitig beschichteten Mittellagen 14 beider Schwenktische 4 versorgt wird.

Die so hergestellten Sandwichplatten 13 können dann nochmals zum Beispiel ein-oder beidseitig mit einer Dekorschicht, wie beispielsweise einer Teppichschicht 46 (Fig. 11) beschichtet werden, und zwar in einem hier nicht dargestellten und an sich bekannten Kaschierwerkzeug. Dazu wird die Teppichschicht 46 zum Beispiel auf ein Nagelbett 47 aufgelegt, und zwar mit ihrer Sichtseite nach unten, wobei die der Sichtseite gegenüberliegende Unterseite der Teppichschicht 46 zum Beispiel mittels einer Klebstoffauftragswalzeneinrichtung 6, wie sie zuvor ausführlich erläutert worden ist, in definierten Bereichen flächig mit einer Klebstoffschicht 48 versehen wird. Diese Klebstoffschicht 48 ist in der Fig. 11 lediglich äußerst schematisch strichliert dargestellt.

Derartige Teppichschichten 46 weisen regelmäßig, wie dies in der Fig. 12 schematisch dargestellt ist, eine randseitige Einfassung 49 auf, die nicht mit Klebstoff verunreinigt werden darf. In diesem Fall ist es dann vorteilhaft, analog zur zuvor beschriebenen Vorgehensweise bei der Beschichtung der Mittellage 14, den Walzenauftrag mittels der Auftragswalze 8 lediglich bis zu einem definierten Spaltabstand zur Einfassung 49 hin vorzusehen und den an die Einfassung 49 angrenzenden Unterseitenbereich der Teppichschicht 46 mit einem Sprühfilm einer Spinnsprühdüse 31 einer Klebstoffauftragswalzeneinrichtung 6 zu beschichten, wie dies ebenfalls bereits zuvor in Verbindung mit der Mittellage 14 näher erläutert worden ist.

Grundsätzlich kann diese Beschichtung der Teppichschicht 46 zum Beispiel auch auf dem Schwenktisch 4 der Vorrichtung 1 erfolgen. Es kann jedoch hierfür auch eine separate Beschichtungsstation mit entsprechender Werkzeugbestückung vorgesehen sein.

Anschließend werden dann die mit Klebstoff beschichtete Teppichschicht 46 und die Sandwichplatte 13 zusammengeklebt (Pfeil 50 in Fig. 11) und in ein hier nicht dargestelltes Kaschierwerkzeug eingebracht, in dem dann die Teppichschicht 46 fest auf die Sandwichplatte 13 aufkaschiert wird.

## Patentansprüche

1. Verfahren zur Herstellung einer Sandwichplatte,
wobei die Sandwichplatte (13) wenigstens eine zwischen zwei Deckschichten (40, 42) angeordnete Kern- oder Mittellage (14) aufweist, die mit den Deckschichten (40, 42) fest verbunden ist, wobei bevorzugt vorgesehen ist, dass die Kern- oder Mittellage (14) wenigstens bereichsweise dergestalt ausgebildet ist, dass diese eine definierte Hohlraumstruktur zwischen den beiden Deckschichten (40, 42) ausbildet,
wobei die Kern- oder Mittellage (14) in eine Werkstück-Aufnahmeeinrichtung (4) auf - und/oder eingelegt wird,
wobei anschließend die Kern- oder Mittellage (14) auf beiden Seiten in definierten Mittellagenbereichen mit Klebstoff beschichtet wird, insbesondere flächig beschichtet wird, und
wobei weiter anschließend die so mit Klebstoff beschichtete Kern- oder Mittellage (14) mittels einer Transfereinrichtung (10) einer Presseinrichtung (5) zugeführt wird, in der die beiden Deckschichten (40, 42), bevorzugt gleichzeitig, mit der Kern- oder Mittellage (14) verbunden und/oder verpresst werden,
**dadurch gekennzeichnet,**
**dass** die Kern- oder Mittellage (14) mittels einer eine Auftragswalze (8) aufweisenden Klebstoffauftragswalzeinrichtung (6) mit Klebstoff beschichtet wird,
**dass** die Klebstoffwalzenauftragseinrichtung (6) zusätzlich zu der wenigstens einen Auftragswalze (8) wenigstens eine Klebstoff-Sprüheinrichtung (31), insbesondere eine Spinnsprühdüse, aufweist, mittels der die Kern- oder Mittellage (14) entlang eines definierten äußeren Umfangsrandbereichs (30) wenigstens abschnittsweise mit Klebstoff besprüht wird, und
**dass** der Klebstoff mit der Auftragswalze (8) auf den sich an den Umfangsrandbereich (30) nach innen hin anschließenden Kern- oder Mittellagenbereich (29) aufgebracht wird.

2. Verfahren nach Anspruch 1, **dadurch gekennzeichnet, dass** die Kern- oder Mittellage (14) nach der Beschichtung einer ersten Kern- oder Mittellagenseite (18) in der Werkstück-Aufnahmeeinrichtung (4) gewendet wird, vorzugsweise um 180° gewendet wird, und dass anschließend die zweite Kern- oder Mittellagenseite (21) in definierten Kern- oder Mittellagenbereichen mit Klebstoff beschichtet wird.

3. Verfahren nach Anspruch 2, **dadurch gekennzeichnet, dass** die bereits beschichtete Kern- oder Mittellagenseite (18) nach dem Wenden in der Werkstück-Aufnahmeeinrichtung (4) mittels wenigstens einer Heizeinrichtung (4) mit Wärme beaufschlagt wird, vorzugsweise dergestalt, dass die auf die Kern- oder Mittellage (14) aufgebrachte erste Klebstoffschicht auf eine definierte Temperatur, bevorzugt wenigstens eine Klebstoffaktivierungstemperatur, höchst bevorzugt auf eine Temperatur von größer 80°C erhitzt wird.

4. Verfahren nach einem der Ansprüche 1 bis 3, **dadurch gekennzeichnet, dass** die Auftragswalze (8) der Klebstoffauftragswalzeinrichtung (6) mittels einer Steuer- und/oder Regeleinrichtung (12) konturangepasst und/oder in beliebige Raumrichtungen entlang der zu beschichtenden Kern- oder Mittellagenseite (18, 21) verfahren wird, insbesondere dergestalt, dass diese einen stets gleichen Abstand zu dem zu beschichtenden Bereich der Kern- oder Mittellage (14) auch für den Fall aufweist, dass die zu beschichtenden Bereiche der Kern- oder Mittellage (14) wenigstens teilweise unterschiedlich ausgebildet sind und/oder auf unterschiedlichen Höhenniveaus liegen, insbesondere, im Querschnitt betrachtet, eine unterschiedliche Form und/oder Höhe und/oder Breite aufweisen.

5. Verfahren nach einem der Ansprüche 1 bis 4, **dadurch gekennzeichnet, dass** die Kern- oder Mittellage (14) eine Mehrzahl von voneinander beabstandeten Kuppen (16) und Tälern (17) aufweist, und dass wenigstens ein Teil der Kuppen (16) an ihrer Spitze abgeflacht ist und diese damit eine flächige Klebstoffauftragsfläche (19) ausbilden, auf die mittels der Auftragswalze (8) in definierten Kern- oder Mittellagenbereichen eine Kleberaupe (26) oder ein Klebepunkt flächig aufgetragen wird, wobei bevorzugt vorgesehen ist, dass in die durch die kuppelseitige Abflachung ausgebildete Klebstoffauftragsfläche eine Vertiefung, insbesondere dellen- und/oder kraterartige Vertiefung, eingebracht ist.

6. Verfahren nach einem der Ansprüche 1 bis 5, **dadurch gekennzeichnet, dass** die Transfereinrichtung (10) die Kern- oder Mittellage (14), nach der beidseitigen Beschichtung der Kern- oder Mittellage (14), aufnimmt und der Presseinrichtung (5) zuführt, wobei der Transfereinrichtung (10) wenigstens eine Heizeinrichtung (39) zugeordnet ist, mittels der die neu aufgebrachte zweite Klebstoffschicht, vorzugsweise während des Transfers zur Presseinrichtung (5), mit Wärme beaufschlagt wird, vorzugsweise dergestalt, dass die mit Wärme beaufschlagte Klebstoffschicht auf eine definierte Temperatur, bevorzugt auf eine Klebstoffaktivierungstemperatur, höchst bevorzugt auf eine Temperatur von größer 80°C aufgeheizt wird.

7. Verfahren nach einem der Ansprüche 1 bis 6, **dadurch gekennzeichnet, dass** die beidseitig mit Klebstoff beschichtete Kern- oder Mittellage (14) in der Presseinrichtung (5) mit den darin eingelegten Deckschichten (40, 42) mit einer definierten Presskraft, vorzugsweise einer Presskraft von mehr als 20t, für eine definierte Presszeit, vorzugsweise für mehr als 20s, verpresst wird, wobei die Presseinrichtung (5) mittels einer Kühleinrichtung (45) gekühlt wird, vorzugsweise dergestalt, dass die Sandwichplatte (13) aus Kern- oder Mittellage (14) und Deckschichten (40, 42) auf Raumtemperatur abgekühlt wird.

8. Verfahren nach einem der Ansprüche 1 bis 7, **dadurch gekennzeichnet, dass** eine auf die Sandwichplatte (13) aufzubringende Dekorschicht (46), insbesondere eine Teppichschicht oder dergleichen, die vorzugsweise außenumfangsseitig mit einer kederartigen Einfassung (49) versehen ist, mittels der wenigstens einen Auftragswalze (8) einer Klebstoffauftragswalzeneinrichtung (6) an einer Unterseite wenigstens bereichsweise flächig in definierten Unterseitenbereichen mit Klebstoff beschichtet wird, und
dass anschließend die so beschichtete Dekorschicht (46) zusammen mit der Sandwichplatte (13) in ein Kaschierwerkzeug eingebracht und die Dekorschicht (46) auf die Sandwichplatte (13) aufkaschiert wird.

9. Verfahren nach Anspruch 8, **dadurch gekennzeichnet, dass** die Klebstoffschicht mittels der Auftragswalze (8) in einem definierten Spaltabstand zu der Einfassung (49) aufgebracht ist, und
dass der wenigstens bereichsweise Klebstoffauftrag im Anschluss an die Einfassung (49) und damit im Spaltabstandsbereich mittels einer Klebstoff-Sprüheinrichtung (31), insbesondere einer Spinnsprühdüse, vorgenommen wird.

10. Vorrichtung zur Herstellung einer Sandwichplatte, insbesondere zur Durchführung eines Verfahrens nach einem der vorhergehenden Verfahrensansprüche,
wobei die Sandwichplatte (13) wenigstens eine zwischen zwei Deckschichten (40, 42) angeordnete Kern- oder Mittellage (14) aufweist, die mit den Deckschichten (40, 42) fest verbunden ist, wobei bevorzugt vorgesehen ist, dass die Kern- oder Mittellage (14) wenigstens bereichsweise dergestalt ausgebildet ist, dass diese eine definierte Hohlraumstruktur zwischen den beiden Deckschichten (40, 42) ausbildet,
wobei eine Werkstück-Aufnahmeeinrichtung (4) vorgesehen ist, in die die Kern- oder Mittelage (14) zur Klebstoffbeschichtung auf- und/oder einlegbar ist, und
wobei weiter eine Transfereinrichtung (10) vorgesehen ist, mittels der die mit Klebstoff beschichtete Kern- oder Mittellage (14) zu einer Presseinrichtung (5) transferierbar und/oder transportierbar ist, in welcher Presseinrichtung (5) eine Deckschicht-Aufnahme vorgesehen ist, in und/oder auf der eine oder bevorzugt beide Deckschichten (40, 42) aufnehmbar und bei einer Pressbestätigung mit der Kern- oder Mittellage (14) verpressbar und/oder verbindbar sind,
**dadurch gekennzeichnet,**
**dass** eine, eine Auftragswalze (8) aufweisende Klebstoffauftragswalzeinrichtung (6) vorgesehen ist, die weiter mit einem Klebstoffreservoir (22) verbunden ist oder ein solches aufweist, mittels der, gesteuert oder geregelt über eine mit der Vorrichtung (1) gekoppelte oder Bestandteil derselben bildende Steuer- und/oder Regeleinrichtung (12), die Kern- oder Mittellage (14) in definierten Kern- oder Mittellagenbereichen mittels der Auftragswalze (8) mit Klebstoff beschichtbar ist, und
**dass** die Klebstoffauftragswalzeinrichtung (6) zusätzlich zu der wenigstens einen Auftragswalze (8) wenigstens eine Klebstoff-Sprüheinrichtung (31), insbesondere eine Spinnsprühdüse, aufweist, mittels der Klebstoff auf definierte Kern- oder Mittellagenbereiche aufsprühbar ist, wobei die Klebstoff-Sprüheinrichtung (31) und die wenigstens eine Auftragswalze (8) bevorzugt gemeinsam an einem Schwenkarm (7), insbesondere an einem Roboterarm, der Klebstoffauftragswalzeinrichtung (6) in definierte Raumrichtungen verlagerbar angeordnet sind.

11. Vorrichtung nach Anspruch 10, **dadurch gekennzeichnet, dass** die Werkstück-Aufnahmeeinrichtung (4) als Schwenktisch mit einer ersten Auflageeinrichtung (15) für die Kern- oder Mittellage (14) ausgebildet ist, auf der die Kern- oder Mittellage (14) für eine Beschichtung einer ersten Kern- oder Mittellagenseite (18) aufliegt und/oder gehaltert ist, und
dass die Werkstück-Aufnahmeeinrichtung (4) einen Schwenkmechanismus aufweist, mittels dem die erste Auflageeinrichtung (15) so um eine Schwenkachse (36) verschwenkbar ist, dass die einseitig beschichtete Kern- oder Mittellage (14) mit ihrer beschichteten Seite auf einer vorzugsweise als Nagelbett ausgebildeten zweiten Auflageeinrichtung (37) aufliegt und/oder gehaltert ist, wobei die unbeschichtete Kern- oder Mittellagenseite (21) nach oben, von der zweiten Auflageeinrichtung (37) weg weist.

12. Vorrichtung nach Anspruch 11, **dadurch gekennzeichnet, dass** der Werkstück-Aufnahmeeinrichtung (4), insbesondere der zweiten Auflageeinrichtung (37), wenigstens eine Heizeinrichtung (38), vorzugsweise wenigstens ein Karbonstrahler oder dergleichen zugeordnet ist oder Bestandteil derselben ist, mittels der eine auf die Kern- oder Mittellage (14) aufgebrachte Klebstoffbeschichtung, insbesondere eine erste Klebstoffbeschichtung, beheizbar ist.

13. Vorrichtung nach einem der Ansprüche 10 bis 12, **dadurch gekennzeichnet, dass** der Transfereinrichtung (10) wenigstens eine Heizeinrichtung (39), vorzugsweise wenigstens ein Karbonstrahler oder dergleichen, zugeordnet ist oder Bestandteil derselben ist, mittels der eine auf die Kern- oder Mittellage (14) aufgebrachte Klebstoffbeschichtung, insbesondere eine zweite Klebstoffbeschichtung, beheizbar ist.

14. Vorrichtung nach einem der Ansprüche 10 bis 13, **dadurch gekennzeichnet, dass** der Presseinrichtung (5) wenigstens eine Kühleinrichtung (45), insbesondere ein Wärmetauscher oder dergleichen, zugeordnet ist oder Bestandteil derselben bildet, mittels der das Werkzeug und/oder die Sandwichplatte (13) kühlbar sind.

## Claims

1. Method for producing a sandwich panel,
wherein the sandwich panel (13) has at least one core or central layer (14) arranged between two covering layers (40, 42), which is tightly connected to the covering layers (40, 42), wherein provision is preferably made for the core or central layer (14) to be designed at least in certain regions in such a way that this forms a defined cavity structure between both covering layers (40, 42),
wherein the core or central layer (14) is inserted into, or laid onto a tool receiving device (4),
wherein, then, the core or central layer (14) is coated with adhesive on both sides in defined central layer regions, in particular surface coated, and
wherein, after that, the core or central layer (14) coated with adhesive in this way is supplied by means of a transfer device (10) of a pressing device (5), in which both covering layers (40, 42) are connected to or pressed into the core or central layer (14), preferably at the same time,
**characterised in that**,
the core or central layer (14) is coated with adhesive by means of an adhesive application rolling device (6) having an application roller (8),
that the adhesive application rolling device (6) has at least one adhesive spraying device (31), in particular a spin spraying nozzle, in addition to the at least one application roller (8), by means of which the core or central layer (14) is sprayed with adhesive at least in sections along a defined external peripheral edge region (30), and
that, with the application roller (8), the adhesive is applied to the core or central layer region (29) that closes inwards towards the peripheral edge region (30).

2. Method according to claim 1, **characterised in that** the core or central layer (14) is rotated after the coating of a first core or central layer side (18) in the tool receiving device (4), preferably rotated 180°, and that then the second core or central layer side (21) is coated with adhesive in defined core or central layer regions.

3. Method according to claim 2, **characterised in that** the core or central layer sides (18) that have already been coated are charged with heat by means of at least one heating device (4) after rotation in the tool receiving device (4), preferably in such a way that the first adhesive layer applied to the core or central layer (14) is heated to a defined temperature, preferably at least an adhesive activation temperature, and ideally to a temperature that is greater than 80°C.

4. Method according to one of claims 1 to 3, **characterised in that** the application roller (8) of the adhesive application rolling device (6) is moved by means of a control and/or regulation device (12) in a contour-adapted manner and/or in any spatial directions along the core or central layer side (18, 21) that is to be coated, in particular in such a way that this always has a same distance to the region of the core or central layer (14) that is to be coated, even if the regions of the core or central layer (14) that are to be coated are designed at least partially differently and/or are located at different height levels, in particular if they have, as viewed in the cross-section, a different shape and/or height and/or width.

5. Method according to one of claims 1 to 4, **characterised in that** the core or central layer (14) has a plurality of crests (16) and valleys (17) that are separated from one another, and that at least one part of the crests (16) is truncated at its peak, and these thus form a laminar adhesive application surface (19), onto which an adhesive beading (26) or adhesive point are applied at the surface by means of the application roller (8) in defined core or central layer regions, wherein provision is preferably made for a depression, in particular a dent-like or crater-like depression, to be introduced into the adhesive application surface formed by the crest-side truncation.

6. Method according to one of claims 1 to 5, **characterised in that** the transfer device (10) receives the core or central layer (14) after the dual-sided coating of the core or central layer (14) and supplies the pressing device (5), wherein the transfer device (10) is allocated to at least one heating device (39), by means of which the newly-applied second adhesive layer is charged with heat, preferably during the transfer to the pressing device (5), and preferably in such a way that the adhesive layer charged with heat is heated to a defined temperature, preferably to an adhesive activation temperature and ideally to a temperature that is greater than 80°.

7. Method according to one of claims 1 to 6, **characterised in that** the core or central layer (14) coated with adhesive on both sides in the pressing device (5) is pressed with the covering layers (40, 42) inserted therein with a defined pressing force, preferably a pressing force of more than 20t, for a defined pressing time, preferably for more than 20s, wherein the pressing device (5) is cooled by means of a cooling device (45), preferably in such a way that the sandwich panel (13) formed from core or central layer (14) and covering layers (40, 42) is cooled to room temperature.

8. Method according to one of claims 1 to 7, **characterised in that** a decorative layer (46) that is to be applied to the sandwich panel (13), in particular a carpet layer or suchlike, which preferably has a welt-like edging (49) added to the external periphery, is coated with adhesive at least in certain regions on the surface in defined underside regions by means of the at least one application roller (8) of an adhesive application rolling device (6) on an underside, and that then the decorative layer (46) coated in such a way, together with the sandwich panel (13), is inserted into a laminating tool and the decorative layer (46) is laminated onto the sandwich panel (13).

9. Method according to claim 8, **characterised in that** the adhesive layer is applied by means of the application roller (8) in a defined gap distance to the edging (49), and
that the adhesive application, which is at least in certain regions, takes place after the edging (49) and thus in the gap distance region by means of an adhesive spraying device (31), in particular a spin spraying nozzle.

10. Device for the production of a sandwich panel, in particular for carrying out a method according to one of the preceding method claims,
wherein the sandwich panel (13) has at least one core or central layer (14) arranged between two covering layers (40, 42), which is tightly connected to the covering layers (40, 42), wherein provision is preferably made for the core or central layer (14) to be designed at least in certain regions in such a way that this forms a defined cavity structure between both covering layers (40, 42),
wherein a tool receiving device (4) is provided, into which or onto which the core or central layer (14) is inserted or laid for coating with an adhesive, and
wherein, furthermore, a transfer device (10) is provided, by means of which the core or central layer (14) coated with adhesive can be transferred and/or transported to a pressing device (5), in which pressing device (5) a covering layer receiver is provided, in and/or on and/or to which one, or preferably both, covering layers (40, 42) can be received and, for a pressing with the core or central layer (14), pressed and/or connected,
**characterised in that**,
an adhesive application rolling device (6) having an application roller (8) is provided, which is furthermore connected to, or is, an adhesive reservoir (22), by means of which, controlled or regulated by a control and/or regulation device (12) that is coupled to the device (1) or forms a component of the same, the core or central layer (14) can be coated with adhesive in defined core or central regions by means of the application roller (8), and
that the adhesive application rolling device (6), in addition to the at least one application roller (8), has at least one adhesive spraying device (31), in particular a spin spraying nozzle, by means of which adhesive can be sprayed onto defined core or central layer regions, wherein the adhesive spraying device (31) and the at least one application roller (8) are preferably displaceably arranged mutually on a rotating arm (7), in particular on a robotic arm, of the adhesive application rolling device (6) in defined spatial directions.

11. Device according to claim 10, **characterised in that** the tool receiving device (4) is designed as a swivelling table with a first support device (15) for the core or central layer (14), on which the core or central layer (14) for a coating of a first core or central layer side (18) lies and/or is held, and
that the tool receiving device (4) has a swivelling mechanism, by means of which the first support device (15) can be rotated around a rotational axis (36), that the core or central layer coated on one side lies and/or is held with its coated side on a second support device (37) that is preferably designed as a bed of nails, wherein the uncoated core or central layer side (21) points upwards away from the second support device (37).

12. Device according to claim 11, **characterised in that** at least one heating device (38), preferably at least one carbon emitter or suchlike, is allocated to the tool receiving device (4), in particular the second support device (37), or is a component of the same, by means of which an adhesive coating applied to the core or central layer (14), in particular a first adhesive coating, can be heated.

13. Device according to one of claims 10 to 12, **characterised in that** at least one heating device (39), preferably at least one carbon emitter or suchlike, is allocated to the transfer device (10) or is a component of the same, by means of which an adhesive coating applied to the core or central layer (14), in particular a second adhesive coating, can be heated.

14. Device according to one of claims 10 to 13, **characterised in that** at least one cooling device (45), in particular at least one heat exchanger or suchlike, is allocated to the pressing device (5) or is a component of the same, by means of which the tool and/or the sandwich panel (13) can be cooled.

## Revendications

1. Procédé de fabrication d'une plaque sandwich,
la plaque sandwich (13) présente au moins une couche noyau ou médiane (14) qui est disposée entre deux couches de recouvrement (40, 42) et qui est fixement reliée aux couches de recouvrement (40, 42), il est de préférence prévu que la couche noyau ou médiane (14) soit réalisée au moins par endroits de manière à présenter une structure d'espace creux définie entre les deux couches de recouvrement (40, 42),
la couche noyau ou médiane (14) est placée et/ou insérée dans un dispositif de logement de pièce (4),
la couche noyau ou médiane (14) est ensuite revêtue, en particulier à plat, de colle sur les deux côtés dans des zones de couche médiane définies, et
la couche noyau ou médiane (14) revêtue ainsi de colle est ensuite amenée à l'aide d'un dispositif de transfert (10) à un dispositif de pressage (5), dans lequel les deux couches de revêtement (40, 42) sont reliées et/ou pressées de préférence simultanément à la couche noyau ou médiane (14),
**caractérisé en ce que**
la couche noyau ou médiane (14) est revêtue de colle à l'aide d'un dispositif à rouleau d'application de colle (6) présentant un rouleau d'application (8),
le dispositif d'application à rouleau de colle (6) présente, outre ledit au moins un rouleau d'application (8), au moins un dispositif de pulvérisation de colle (31), en particulier une buse de pulvérisation de filature, à l'aide de laquelle la couche noyau ou médiane (14) est pulvérisée de colle au moins par sections le long d'une zone de bord périphérique (30) extérieure définie, et
la colle est appliquée avec le rouleau d'application (8) sur la zone de couche noyau ou médiane (29) contiguë à la zone de bord périphérique vers l'intérieur(30).

2. Procédé selon la revendication 1, **caractérisé en ce que** la couche noyau ou médiane (14) est tournée après le revêtement d'un premier côté de couche noyau ou médiane (18) dans le dispositif de logement de pièce (4), de préférence de 180°, et **en ce que** le deuxième côté de couche noyau ou médiane (21) est ensuite revêtu de colle dans des zones de couche noyau ou médiane définies.

3. Procédé selon la revendication 2, **caractérisé en ce que** le côté de couche noyau ou médiane (18) déjà revêtu est alimenté en chaleur après la rotation dans le dispositif de logement de pièce (4) à l'aide d'au moins un dispositif de chauffage (4), de préférence de telle manière que la première couche de colle appliquée sur la couche noyau ou médiane (14) soit chauffée à une température définie, de préférence au moins une température d'activation de colle, de manière davantage préférée à une température supérieure à 80°C.

4. Procédé selon l'une quelconque des revendications 1 à 3, **caractérisé en ce que** le rouleau d'application (8) du dispositif à rouleau d'application de colle (6) est adapté au contour à l'aide d'un dispositif de commande et/ou de régulation (12) et/ou est déplacé dans des directions dans l'espace quelconques le long du côté de couche noyau ou médiane (18, 21) à revêtir, en particulier de telle manière que celui-ci présente une distance toujours identique par rapport à la zone à revêtir de la couche noyau ou médiane (14) aussi au cas où les zones à revêtir de la couche noyau ou médiane (14) sont réalisées au moins partiellement différemment et/ou se situent à différents niveaux verticaux, en particulier vu en section transversale, présentent une forme et/ou hauteur et/ou largeur différente.

5. Procédé selon l'une quelconque des revendications 1 à 4, **caractérisé en ce que** la couche noyau ou médiane (14) présente une pluralité de dômes (16) et de creux (17) et **en ce qu'**au moins une partie des dômes (16) est aplatie sur leur pointe et ceux-ci réalisent ainsi une surface d'application de colle plate (19), sur laquelle un cordon de colle (26) ou un point de colle est appliqué à plat à l'aide du rouleau d'application (8) dans des zones de couche noyau ou médiane définies, étant de préférence prévu qu'une cavité, en particulier une cavité de type déformation et/ou cratère, soit pratiquée dans la surface d'application de colle réalisée par l'aplatissement côté dôme.

6. Procédé selon l'une quelconque des revendications 1 à 5, **caractérisé en ce que** le dispositif de transfert (10) reçoit la couche noyau ou médiane (14) après le revêtement des deux côtés de la couche noyau ou médiane (14) et l'amène au dispositif de pressage (5), au dispositif de transfert (10) étant associé au moins un dispositif de chauffage (39), à l'aide duquel la deuxième couche de colle à appliquer à nouveau est alimentée en chaleur de préférence pendant le transfert vers le dispositif de pressage (5), de préférence de telle manière que la couche de colle alimentée en chaleur soit chauffée à une température définie, de préférence à une température d'activation de colle, de manière davantage préférée à une température supérieure à 80°C.

7. Procédé selon l'une quelconque des revendications 1 à 6, **caractérisé en ce que** la couche noyau ou médiane (14) revêtue de colle sur les deux côtés est pressée dans le dispositif de pressage (5) avec les couches de recouvrement (40, 42) insérées dedans avec une force de pressage définie, de préférence une force de pressage de plus de 20 t, pour une durée de pressage définie, de préférence pour plus de 20 s, le dispositif de pressage (5) étant refroidi à l'aide d'un dispositif de refroidissement (45), de préférence de telle manière que la plaque sandwich (13) composée de la couche noyau ou médiane (14) et des couches de recouvrement (40, 42) soit refroidie à la température ambiante.

8. Procédé selon l'une quelconque des revendications 1 à 7, **caractérisé en ce qu'**une couche de décor (46) à appliquer sur la plaque sandwich (13), en particulier une couche de tapis ou similaire, qui est de préférence pourvue, sur le côté périphérique extérieur, d'une bordure (49) de type bourrelet, est revêtue de colle à l'aide dudit au moins un rouleau d'application (8) d'un dispositif à rouleau d'application de colle (6) sur un côté inférieur au moins par endroits à plat dans des zones de côté inférieur définies, et
la couche de décor (46) ainsi revêtue est ensuite introduite conjointement avec la plaque sandwich (13) dans un outil de contrecollage et la couche de décor (46) est contrecollée sur la plaque sandwich (13).

9. Procédé selon la revendication 8, **caractérisé en ce que** la couche de colle est appliquée à l'aide du rouleau d'application (8) dans une distance d'espacement définie par rapport à la bordure (49), et
l'application de colle au moins par endroits est entreprise de manière contiguë à la bordure (49) et ainsi dans la zone de distance d'espacement à l'aide d'un dispositif de pulvérisation de colle (31), en particulier une buse de pulvérisation de filature.

10. Dispositif de fabrication d'une plaque sandwich, en particulier pour la réalisation d'un procédé, selon l'une quelconque des revendications précédentes,
la plaque sandwich (13) présente au moins une couche noyau ou médiane (14) qui est disposée entre deux couches de recouvrement (40, 42) et qui est fixement reliée aux couches de recouvrement (40, 42), il est de préférence prévu que la couche noyau ou médiane (14) soit réalisée au moins par endroits de telle manière que celle-ci présente une structure d'espace creux définie entre les deux couches de recouvrement (40, 42), un dispositif de logement de pièce (4) est prévu, dans lequel la couche noyau ou médiane (14) est placée et/ou insérée pour le revêtement de colle, et
un dispositif de transfert (10) est en outre prévu, à l'aide duquel la couche noyau ou médiane (14) revêtue de colle peut être transférée et/ou transportée vers un dispositif de pressage (5), dans lequel un logement de couche de recouvrement est prévu, dans et/ou sur lequel une ou de préférence deux couches de recouvrement (40, 42) peuvent être reçues et pressées et/ou reliées lors d'une confirmation de pressage à la couche noyau ou médiane (14),
**caractérisé en ce que**
un dispositif à rouleau d'application de colle (6) présentant un rouleau d'application (8) est prévu, lequel est en outre relié à un réservoir de colle (22) ou présente un tel réservoir, à l'aide duquel la couche noyau ou médiane (14) peut être revêtue de colle dans des zones de couche noyau ou médiane définies à l'aide du rouleau d'application (8) de manière commandée ou régulée par un dispositif de commande et/ou de régulation (12) couplé au dispositif (1) ou formant une partie de celui-ci, et
le dispositif à rouleau d'application de colle (6) présente, outre ledit au moins un rouleau d'application (8), au moins un dispositif de pulvérisation de colle (31), en particulier une buse de pulvérisation de filature, à l'aide de laquelle de la colle peut être pulvérisée sur des zones de couche noyau ou médiane définies, le dispositif de pulvérisation de colle (31) et ledit au moins un rouleau d'application (8) étant disposés de manière déplaçable de préférence conjointement sur un bras de pivotement (7), en particulier sur un bras de robot du dispositif à rouleau d'application de colle (6), dans des directions dans l'espace définies.

11. Dispositif selon la revendication 10, **caractérisé en ce que** le dispositif de logement de pièce (4) est réalisé comme une table de pivotement avec un premier dispositif d'appui (15) pour la couche noyau ou médiane (14), sur lequel la couche noyau ou médiane (14) repose et/ou est maintenue pour un revêtement d'un premier côté de couche noyau ou médiane (18), et
le dispositif de logement de pièce (4) présente un mécanisme de pivotement, à l'aide duquel le premier dispositif d'appui (15) peut être pivoté autour d'un axe de pivotement (36) de sorte que la couche noyau ou médiane (14) revêtue d'un côté repose et/ou soit maintenue avec son côté revêtu sur un deuxième dispositif d'appui (37) réalisé de préférence comme un lit à clous, le côté de couche noyau ou médiane (21) non revêtu étant tourné vers le haut loin du deuxième dispositif d'appui (37).

12. Dispositif selon la revendication 11, **caractérisé en ce qu'**au moins un dispositif de chauffage (38), de préférence au moins un projecteur de carbone ou similaire, est associé au dispositif de logement de pièce (4), en particulier au second dispositif d'appui (37), ou fait partie de celui-ci, à l'aide duquel un revêtement de colle appliqué sur la couche noyau ou médiane (14), en particulier un premier revêtement de colle, peut être chauffé.

13. Dispositif selon l'une quelconque des revendications 10 à 12, **caractérisé en ce qu'**au moins un dispositif de chauffage (39), de préférence au moins un projecteur de carbone ou similaire est associé au dispositif de transfert (10), ou fait partie de celui-ci, à l'aide duquel un revêtement de colle appliqué sur la couche noyau ou médiane (14), en particulier un deuxième revêtement de colle, peut être chauffé.

14. Dispositif selon l'une quelconque des revendications 10 à 13, **caractérisé en ce qu'**au moins un dispositif de refroidissement (45), en particulier un échangeur de chaleur ou similaire, est associé au dispositif de pressage (5) ou fait partie de celui-ci, à l'aide duquel l'outil et/ou la plaque sandwich (13) peut être refroidie.
